# EUROPEAN PATENT SPECIFICATION

(11) **EP 0 449 377 B1**
(45) Date of publication and mention of the grant of the patent: **30.08.1995**
(21) Application number: 91200689.7
(22) Date of filing: 25.03.1991
(51) Int. Cl.: B23K 26/00

(54) **Method for welding enamelled metal objects and the obtained product**
Verfahren zum Schweissen von emaillierten Gegenständen und Produkt dafür
Méthode de soudage d'éléments métalliques émaillés et produit obtenu

(30) Priority: 26.03.1990 NL 9000710
(43) Date of publication of application: 02.10.1991
(73) Proprietor: Ferro Techniek B.V., NL-7011 AT Gaanderen (NL)
(72) Inventor: Kaastra, Simon, NL-7091 HV Dinxperlo (NL); Tharner, Johannes Gehard, NL-7002 EZ Doetinchem (NL)
(74) Representative: Prins, Hendrik Willem

(56) References cited:
- EP-A- 0 327 320
- PATENT ABSTRACTS OF JAPAN vol. 4, no. 045 (M-006) 09 April 80,& JP-A-55 016748 (KAWASAKI STEEL CORP) 05 February 80,
- PATENT ABSTRACTS OF JAPAN vol. 013, no. 236 (C-602) 30 May 89,& JP-A-01 043349 (TOYOTA MOTOR CORP) 15 February 89,

## Description

The present invention relates to a method for connecting metal object by welding, at least one of which objects is provided on at least one side with an enamel coating. Many metal objects are subjected to a surface coating with enamel, which has a good chemical resistance and is fairly insensitive to thermal (shock) loads. Enamel is moreover moisture impermeable and displays no underrusting. Enamel provides a very good corrosion resistance at high temperatures.

A drawback to enamelled objects is that after enamelling they cannot be subjected to any significant deformation and shaped or hollow products have to be assembled from metal product components mutually connected by welding. When however use is made of conventional welding techniques such as TIG-welding, plasma welding, welding with an acetylene flame, electrode welding and the like, there always occurs a degradation of the enamel coating such that after the welding process the weld seam and adjoining portions of the metal object are no longer covered by the enamel coating and are therefore not protected against corrosion.

The invention has for its object to provide a method wherein, by means of welding, metal objects, at least one of which objects is provided on at least one side with an enamel coating, are joined via a metallic weld connection extending through the enamel coatings, while the enamel coating is substantially unaffected.

This achieved according to the invention with a method for connecting metal objects by welding, at least one of which objects is provided on at least one side with an enamel coating, wherein metal objects are placed in a welding position and are heated with a welding source such that the metal parts melt and the melted metal parts form a metallic weld connection. The enamel coating is thus not damaged by the effect of the welding heath. When in preference both metal manufacture hollow products that are internally enamelled and welded together by means of welding according to the invention and wherein the internal enamel coating substantially wholly covers the underlying metal and protects it against corrosion.

If the welding operation with the welding source is performed through one of both metal objects and this metal object is provided on its surface facing the welding source with an enamel coating, it is possible to subsequently cover the now exposed metallic weld seam and adjoining parts of the metal with a layer of repair enamel.

A welding source that can be used with the method according to the invention must have a great local energy density. This energy density lies generally in a range of about 0.1-10x10¹⁰W/cm.

As welding source can be used for instance a welding laser having a laser power of for instance 1250 kilowatt.

The invention further relates to a metal product obtained with the welding method according to the invention. This metal product is characterized in that it comprises at least two metal objects, at least one of which objects is provided on at least one side with an enamel coating, which are connected while enclosing the enamel coating by a metallic weld connection extending through the enamel coating.

Mentioned and other features will be elucidated hereinafter in the light of a number of non-limitative embodiments of the welding method according to the invention, wherein reference is made to the annexed drawing.

In the drawing:
figures 1A-1C show a first embodiment of the welding method according to the invention for welding metal objects enamelled on two sides;
figure 2 shows a number of microscopic views of the weld connection obtained in figure 1C;
figure 3A shows welding of shaped, internally enamelled metal object shells;
figure 3B shows a spot enlargement of the weld connection of figure 3A;
figure 4A shows a detail of a heat exchanger enamelled on two sides;
figure 4B is a section along the line IV-IV of figure 4A;
figure 5 is a section through a container assembled from metal parts enamelled on both sides which are connected by welding according to the invention; and
figure 6 shows the welding of metal objects, only one of which objects is enamelled on one side.

The metal objects which are provided on one side or both sides with an enamel coating and which can be used in the welding method according to the invention can consist of any type of metal for welding, in particular steel.

Understood by the term enamel is the description in the NEN-norm 2701, which is to be replaced by the NEN-norm 2711.

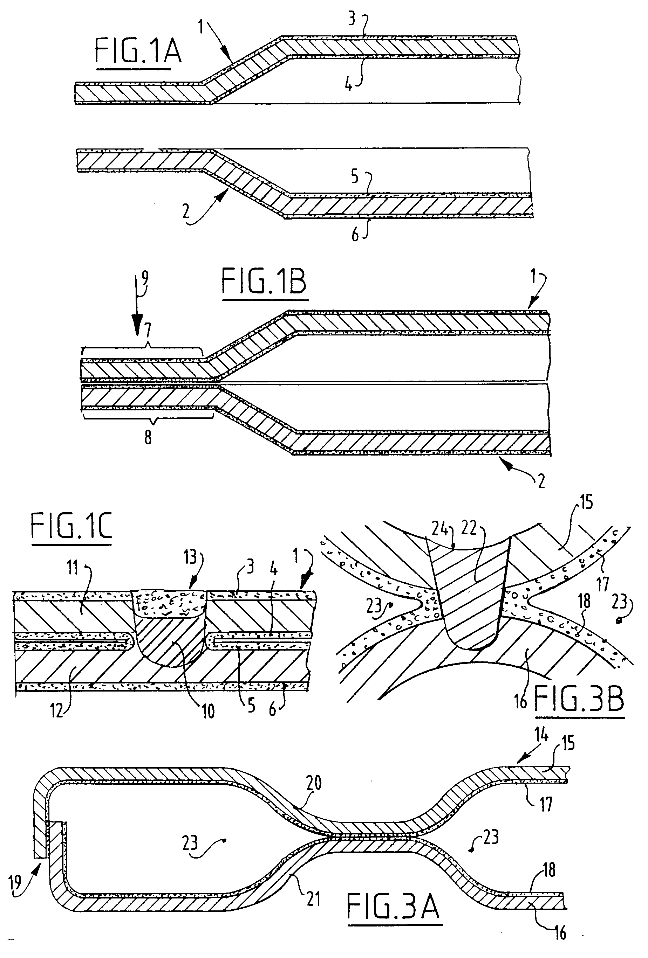

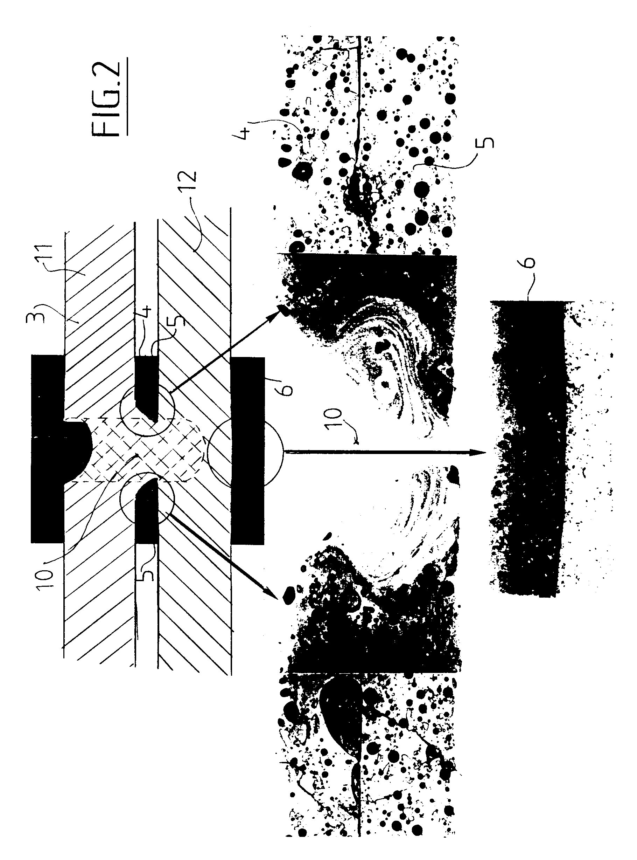

Figure 1 shows the welding method according to the invention. Two shaped metal objects of Vitrostaal (Hoogovens, Ijmuiden), each of which is provided on both sides with an enamel coating 3-6 (figure 1A), are placed in a welding position (figure 1B), where a part 7 of the metal object 1 is pressed against the part 8 of metal object 2, wherein portions of the enamel coating 4 and 5 are enclosed.

A laser bundle of a CO₂ laser with a 1250 watt power is then oriented in the direction of the arrow 9 onto the part 7. At a thickness of both steel sheets of 1 mm welding is then performed at a welding speed of 1.25 m/minute. The obtained weld connection is shown schematically in figure 1C. Both metal objects 1 and 2 are now mutually joined by a weld connection 10 extending between both steel sheets 11 and 12. It can be clearly seen that the weld connection 10 is enclosed at the location of the enamel coatings 4 and 5 by fused enamel originating from both enamel coatings 4 and 5. At the position of the weld seam 13, the place where the laser bundle struck the surface of the part 7 of the metal object 1, the enamel coating 3 has degenerated and the steel plate 11 makes contact there with the outside.

Figure 2 shows microscopic views of a weld connection shown in figure 1C. It can be seen clearly that the weld region 10 is enclosed by fused enamel and that under the weld connection 10 the enamel of the enamel coating 6 is intact.

The product obtained by means of laser welding as in figure 1C can be used in recuperative heat exchangers in flue gas treatment in which highly corrosive gas is desulphurized.

Figure 3A shows a detail of a substantially flat, internally enamelled boiler 14 assembled from metal shells 15, 16 which are each provided with a respective enamel coating 17, 18. The shells 15 and 16 are joined by means of laser welding according to the invention on an overlapping connection 19 as well as at the location of spacer studs 20 and 21 making mutual contact and arranged spread over the surface of the shells 15 and 16. Figure 3B shows in schematic detail the weld connection 22. It can be clearly seen that relative to the interior 23 of the boiler 14 the weld connection 22 is protected by the fused enamel coatings 17 and 18. The exterior surface 24 of the weld connection lies exposed, but in a substantially non-corrosive environment. Thus results a maintenance-free boiler adequately protected internally against corrosion by enamelling so that a so-called sacrificial anode can be dispensed with.

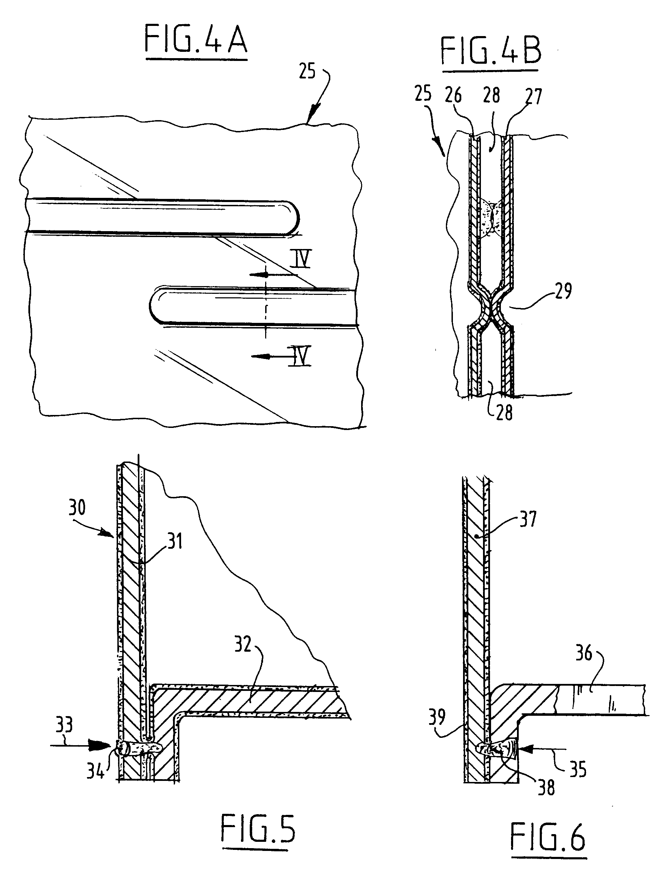

Figure 4 shows a detail of a heat exchanger 25 for a high-yield air heating appliance, wherein the combustion gases pass through an artificially extended path.

The heat exchanger is assembled from plates 26 and 27 enamelled on both sides which, as described above, are welded together by means of laser welding. It can be seen clearly that the interior 28 of heat exchanger 25 is provided with an intact, corrosion-resistant enamel coating, while on the outside at the height of the location where the laser bundle struck the surface of the metal plate 27 a repair enamel layer 29 is applied.

Figure 5 shows a portion of a storage tank 30 assembled from metal objects 31 and 32 welded together and enamelled on both sides. The objects 31 and 32 are mutually welded at the height of the arrow 33 using a laser bundle in the direction of the same arrow 33, whereafter a repair enamel layer 34 is applied.

Finally, figure 6 shows the fixing by means of welding according to the invention in the direction of the arrow 35 of a non-enamelled bracket 36 to a visual plate 37 enamelled on both sides. The metallic weld connection 38 is formed but the enamel coating layer 39 is substantially unaffected by the welding heat.

## Claims

1. A method for connecting metal objects by welding, at least one of which objects is provided on at least one side with an enamel coating, wherein metal objects are placed in a welding position whereby the enamel coating is enclosed between the metal objects and they are heated with a welding source such that the melted metal parts extend through this enamel coating and as a result of the welding the enamel fuses and covers the weld connection.

2. A method as claimed in claim 1, wherein the metal objects are provided on at least one side with an enamel coating, the metal objects are placed in the welding position with the two enamel coatings enclosed between the metal objects, and are heated with a welding source such that the melted metal parts extend through the enamel coatings and as a result of the welding the enamel fuses and covers the weld connection.

3. A method as claimed in claim 1 or 2, wherein at least one of the metal objects is provided on both sides with an enamel coating.

4. A method as claimed in claims 1-3, wherein both metal objects are provided on both sides with an enamel coating.

5. A method as claimed in claims 1-4, wherein the welding operation with the welding source is performed through one of both metal objects.

6. A method as claimed in claim 5, wherein the metal object through which welding is performed is provided on both sides with an enamel coating and a repair enamel coating is applied to the weld seam.

7. A method as claimed in claims 1-6, wherein the welding source is a welding laser.

8. A method as claimed in claim 7, wherein the welding laser is a CO₂ laser.

9. A metal product comprising at least two metal objects, at least one of which objects is provided on at least one side with an enamel coating, which are connected while enclosing the enamel coating by a metallic weld connection extending through the enamal coating.

10. A product as claimed in claim 9, wherein both metal objects comprise at least one enamel coating, are connected while enclosing the enamel coatings and the enamel coatings cover the metallic weld connection extending through these enamel coatings.

11. A product as claimed in claim 10, wherein at least one of the metal objects is provided on both sides with an enamel coating and weld seam is covered with a layer of repair enamel.

12. A product as claimed in claims 9-11, wherein the weld seam is a laser weld seam.

## Patentansprüche

1. Verfahren zur Verbindung von Metallgegenständen durch Schweißen, wobei mindestens einer der Gegenstände auf mindestens einer Seite mit einer Emailschicht versehen ist, bei dem Metallgegenstände in einer Schweißstellung angeordnet werden, wodurch die Emailschicht zwischen den Metallgegenständen eingeschlossen wird, und diese mit einer Schweißquelle erhitzt werden, so daß die geschmolzenen Metallteile sich durch diese Emailschicht erstrecken und das Email durch das Schweißen schmilzt und die Schweißverbindung bedeckt.

2. Verfahren nach Anspruch 1, bei dem die Metallgegenstände auf mindestens einer Seite mit einer Emailschicht versehen sind, die Metallgegenstände in der Schweißstellung angeordnet werden, bei der die beiden Emailschichten zwischen den Metallgegenständen eingeschlossen sind, und diese mit einer Schweißquelle erhitzt werden, so daß die geschmolzenen Metallteile sich durch die Emailschichten erstrecken und das Email durch das Schweißen schmilzt und die Schweißverbindung bedeckt.

3. Verfahren nach Anspruch 1 oder 2, bei dem mindestens einer der Metallgegenstände auf beiden Seiten mit einer Emailschicht versehen ist.

4. Verfahren nach den Ansprüchen 1 bis 3, bei dem beide Metallgegenstände auf beiden Seiten mit einer Emailschicht versehen sind.

5. Verfahren nach den Ansprüchen 1 bis 4, bei dem der Schweißvorgang mit der Schweißquelle durch einen der beiden Metallgegenstände hindurch ausgeführt wird.

6. Verfahren nach Anspruch 5, bei dem der Metallgegenstand, durch den hindurch das Schweißen ausgeführt wird, auf beiden Seiten mit einer Emailschicht versehen ist, und ein Emailreparaturbelag auf die Schweißnaht aufgetragen wird.

7. Verfahren nach den Ansprüchen 1 bis 6, bei dem Schweißquelle ein Schweißlaser ist.

8. Verfahren nach Anspruch 7, bei dem Schweißlaser ein CO₂-Laser ist.

9. Metallerzeugnis, das mindestens zwei Metallgegenstände, von denen mindestens einer auf mindestens einer Seite mit einer Emailschicht versehen ist, aufweist, die unter Einschluß der Emailschicht durch eine metallische, sich durch die Emailschicht erstreckende Schweißverbindung verbunden sind.

10. Erzeugnis nach Anspruch 9, bei dem beide Metallgegenstände mindestens eine Emailschicht aufweisen, unter Einschluß der Emailschichten miteinander verbunden sind, und die Emailschichten die metallischen, sich durch diese Emailschichten erstreckenden Schweißverbindungen bedecken.

11. Erzeugnis nach Anspruch 10, bei dem mindestens einer der Metallgegenstände auf beiden Seiten mit einer Emailschicht versehen ist, und die Schweißnaht mit einem Belag von Reparaturemail bedeckt ist.

12. Erzeugnis nach den Ansprüchen 9 bis 11, bei dem die Schweißnaht eine Laserschweißnaht ist.

## Revendications

1. Procédé pour assembler des objets métalliques par soudage, dont au moins l'un est muni d'un revêtement d'émail sur au moins une face, dans lequel les objets métalliques sont placés dans une position de soudage dans laquelle le revêtement d'émail est enfermé entre les objets métalliques, et ils sont chauffés à l'aide d'une source de soudage de telle manière que les parties métalliques fondues traversent ledit revêtement d'émail et que, sous l'effet du soudage, l'émail fonde et recouvre le joint d'assemblage soudé.

2. Procédé selon la revendication 1, dans lequel les objets métalliques sont munis d'un revêtement d'émail sur au moins une face, les objets métalliques sont placés dans la position de soudage avec les deux revêtements d'émail enfermés entre les objets métalliques, et sont chauffés à l'aide d'une source de soudage de telle manière que les parties métalliques fondues traversent les revêtements d'émail et que l'émail fonde sous l'effet du soudage et recouvre le joint d'assemblage soudé.

3. Procédé selon la revendication 1 ou 2, dans lequel au moins l'un des objets métalliques est muni d'un revêtement d'émail sur deux faces.

4. Procédé selon l'une des revendications 1 à 3, dans lequel les deux objets métalliques sont munis d'un revêtement d'émail sur les deux faces.

5. Procédé selon l'une des revendications 1 à 4, dans lequel l'opération de soudage réalisée avec la source de soudage est exécutée à travers l'un des deux objets métalliques.

6. Procédé selon la revendication 5, dans lequel l'objet métallique à travers lequel le soudage est exécuté est muni d'un revêtement d'émail sur les deux faces et un revêtement d'émail de réparation est appliqué au joint d'assemblage soudé.

7. Procédé selon l'une des revendications 1 à 6, dans lequel la source de soudage est un laser de soudage.

8. Procédé selon la revendication 7, dans lequel le laser de soudage est un laser au CO₂.

9. Produit métallique comprenant au moins deux objets métalliques dont au moins l'un est muni d'un revêtement d'émail sur au moins une face, qui sont assemblés, avec le revêtement d'émail enfermé, au moyen d'un joint d'assemblage soudé métallique qui traverse le revêtement d'émail.

10. Produit selon la revendication 9, dans lequel les deux objets métalliques comprennent au moins un revêtement d'émail, sont assemblés, avec les revêtements d'émail enfermés et les revêtements d'émail recouvrent le joint métallique d'assemblage soudé qui traverse ces revêtements d'émail.

11. Produit selon la revendication 10, dans lequel au moins l'un des objets métalliques est muni d'un revêtement d'émail sur les deux faces et le joint d'assemblage soudé est recouvert d'une couche d'émail de réparation.

12. Produit selon l'une des revendications 9 à 11, dans lequel le joint soudé est un joint d'assemblage soudé au laser.
